# EUROPÄISCHE PATENTSCHRIFT

(11) **EP 3 527 061 B1**
(45) Veröffentlichungstag und Bekanntmachung des Hinweises auf die Patenterteilung: **05.05.2021**
(21) Anmeldenummer: 18208575.3
(22) Anmeldetag: 27.11.2018
(51) Int. Cl.: A01D 43/10, A01D 34/81

(54) **LANDWIRTSCHAFTLICHE ERNTEMASCHINE**
AGRICULTURAL HARVESTER
MACHINE AGRICOLE DE RÉCOLTE

(30) Priorität: 19.02.2018 DE 202018100913 U
(43) Veröffentlichungstag der Anmeldung: 21.08.2019
(73) Patentinhaber: PÖTTINGER Landtechnik GmbH, 4710 Grieskirchen (AT)
(72) Erfinder: Gadermayr, Andreas, 4710 Grieskirchen (AT); Bernecker, Josef, 4710 Grieskirchen (AT); Lehner, Josef, 4710 Grieskirchen (AT); Greifeneder, August, 4710 Grieskirchen (AT)
(74) Vertreter: Thoma, Michael

(56) Entgegenhaltungen:
- EP-A1- 0 086 458
- EP-A1- 0 893 051
- WO-A1-01/03494
- DE-U1- 20 115 919
- FR-A1- 2 738 450
- GB-A- 645 098

## Beschreibung

Die vorliegende Erfindung betrifft eine landwirtschaftliche Erntemaschine mit einem rotatorisch antreibbaren Arbeitsrotor zum Bearbeiten von halm- und/oder blattförmigem Erntegut, wobei dem Arbeitsrotor umfangsseitig eine Abdeckhaube zugeordnet ist, die einen Abwurfbereich des Arbeitsrotors begrenzt und/oder einen Förderkanal zwischen dem Arbeitsrotor und der Abdeckhaube begrenzt.

Bei landwirtschaftlichen Erntemaschinen wie Mähmaschinen und Aufbereitern oder Konditionierern wird das Erntegut vom Arbeitsrotor, der üblicherweise mit höherer Drehzahl umläuft, von der Umfangsseite abgeworfen, wobei die Arbeitsrotoren üblicherweise von einer Abdeckhaube umschlossen bzw. abgedeckt sind, um einerseits das Umherfliegen des Ernteguts zu kontrollieren, andererseits aber auch eine Schutzbarriere vor dem Arbeitsrotor zu bilden und Verletzungen zu verhindern.

Die Abdeckhaube kann dabei im Abwurfbereich des Arbeitsrotors ein Leitblech bilden, das sich beispielsweise zumindest abschnittsweise tangential zum Erntegutstrom erstrecken und diesen in eine gewünschte Richtung lenken kann. Andererseits kann die Abdeckhaube aber auch mit dem Arbeitsrotor zusammenwirken, um das Erntegut in der gewünschten Weise zu bearbeiten, insbesondere um beispielsweise eine Konditionier- und Aufschließwirkung zu erzielen, wie sie von einem Aufbereiter bereitgestellt wird. Insbesondere kann das gegen die Abdeckhaube geworfene Erntegut durch die mechanische Aufprallwirkung weiter aufgeschlossen werden, um rascher zu trocknen, wobei dies beispielsweise aber auch dadurch erzielt werden kann, dass die Abdeckhaube zwischen sich und dem Arbeitsrotor einen Förderkanal bildet, durch den das Erntegut hindurchgezwungen wird.

Einerseits sollen solche Abdeckhauben möglichst leicht bauen, um das Maschinengewicht nicht unnötig zu beeinträchtigen. Da es sich bei solchen Abdeckhauben üblicherweise um großflächige Bauteile handelt, wird in der Regel versucht, eine möglichst dünnwandige Ausbildung beispielsweise durch ein dünnes Metallblech vorzusehen. Andererseits muss die Abdeckhaube aber nicht nur ausreichend formstabil sein, um für das angeworfene Erntegut die gewünschte Leitblechfunktion zu erfüllen und ggf. die gewünschte Aufschließ- bzw. Konditionierwirkung zu haben, sondern auch eine ausreichende Festigkeit besitzen, um Steinschlägen zu widerstehen. Leider sind im Erntegut regelmäßig Verunreinigungen wie Erdklumpen oder Steine enthalten, die vom Arbeitsrotor mit entsprechend hoher Energie gegen die Abdeckhaube geschleudert werden, so dass die Abdeckhaube punktuell hohen Belastungen ausgesetzt ist und Verformungen erleidet.

Dabei ist weniger ein tatsächliches Reißen oder Brechen der Abdeckhaube das Problem, zumindest wenn ein Metallblech mit ausreichender Wandstärke verwendet wird. Allerdings kommt es zu Verbeulungen oder Dellen, an denen die Lackierung des Metallblechs bricht oder aufplatzt, was in der Folge zu Korrosionsschäden an der Abdeckhaube führt. Um dies zu verhindern, wurden zwar schon verschiedene Maßnahmen angedacht, die jedoch bislang allesamt im Ergebnis unbefriedigend sind. Werden dickere oder hochfeste Metallbleche für die Abdeckhaube verwendet, steigt deren Gewicht oder auch deren Preis übermäßig an, wobei sich bei hochfesten Metallblechen zudem auch die Problematik ergibt, dass die Bleche schwierig in die stark konturierte Haubenform zu bringen sind, ohne zu reißen. Andere Maßnahmen wie beispielsweise eine elastische Mehrschichtlackierung, wie sie aus dem Automobilbereich bekannt sind, sind den Beanspruchungen solcher Erntemaschinen nicht gewachsen und darüber hinaus auch sehr kostenintensiv.

Aus der Schrift DE 201 15 919 U1 ist eine Mähmaschine mit einem nachgeordneten Aufbereiter bekannt, dessen Aufbereiterrotor von einer Abdeckhaube umfangsseitig abgedeckt wird. Bei diesem Aufbereiter sind zwar die Zinken des Aufbereiterrotors im Bereich ihrer Schlagkanten mit einer Armierung aus hochfestem Werkstoff gegen Steinschläge geschützt, die Abdeckhaube leider allerdings an den zuvor geschilderten Problemen. Ein weiteres Beispiel für einen gattungsgemäßen Aufbereiter, der einer Mähmaschine nachgeschaltet ist, zeigt die Schrift EP 26 33 749 A1.

Ferner zeigen die Schriften EP 24 85 574 B1 und EP 24 85 577 B1 eine landwirtschaftliche Maschine mit einem Kompressionswalzengehäuse, wobei vorgeschlagen wird, das Gehäuse mehrteilig auszubilden, um Verschleißteile einfacher austauschen zu können. Die genannte Steinschlagproblematik löst die genannte Schrift allerdings nicht, zumal die Gehäuseteile nur schwierig zu demontieren sind.

Die Schrift GB 645 098 A zeigt einen Konditionierer, dessen den Rotor umgebende Haube innenseitig mit einer wellenlinien-förmig konturierten Gummibeschichtung versehen ist, um das Erntegut stärker zu bearbeiten. Die Schrift WO 01/03494 A1 zeigt eine Mähmaschine mit einem nachgeordneten Aufbereiter, dem innerhalb eines umgebenden Gehäuses ein einstellbares, bogenförmiges Leitorgan zugeordnet ist. Die Schrift FR 27 38 450 zeigt einen Rasenmäher, dessen rotierenden Messer von einer glockenförmigen Abdeckung umgeben sind, an deren Innenumfangswandung ein thermoplastischer Verschleißschutz vorgesehen ist.

Der vorliegenden Erfindung liegt hiervon ausgehend die Aufgabe zugrunde, eine verbesserte landwirtschaftliche Erntemaschine der genannten Art zu schaffen, die Nachteile des Standes Technik vermeidet und Letzteren in vorteilhafter Weise weiterbildet. Insbesondere soll eine sehr leicht bauende Abdeckhaube geschaffen werden, die trotz ihres geringen Gewichts Lackabplatzungen infolge Beulenbildung und entsprechende Rostanfälligkeit vermeidet.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, an der Innenseite der Abdeckhaube eine Steinschlagbarriere vorzublenden, die auftreffende Steinschläge abfedert, so dass zumindest an der Außenseite der Abdeckhaube keine Beulen- und Dellenbildung eintritt. Auch wenn an der Innenseite der Abdeckhaube an der dort vorgesehenen Steinschlagbarriere Beschädigungen auftreten, bleibt die Außenseite der Abdeckhaube doch unbeschädigt und zumindest weitgehend verformungsfrei, so dass ein dort ggf. aufgebrachter Lack nicht länger abplatzt. Erfindungsgemäß ist an einer dem Arbeitsrotor zugewandten Innenseite der Abdeckhaube eine Prallplatte zum Schutz der Abdeckhaube gegen Steinschlag vom Arbeitsrotor her vorgesehen. Eine solche Prallplatte an der Innenumfangswandung der Abdeckhaube schluckt die Aufprallenergie von anschlagenden Steinen oder anderen Fremdkörpern zumindest insoweit, dass die Abdeckhaube selbst bzw. deren Außenseite keine wesentlichen Verformungen erfährt, so dass die Abdeckhaube dünnwandig ausgebildet sein kann, um ein insgesamt geringes Gewicht zu erzielen.

In Weiterbildung der Erfindung kann eine solche Prallplatte vollflächig aufliegend nach Art einer Beschichtung an der Innenwandung angebracht sein. Die genannte Prallplatte kann sozusagen eine zweite Haut und/oder eine aufgedoppelte Innenschicht der Abdeckhaube bilden, die anders als eine innenseitig aufgebrachte Lackschicht eine deutlich größere Materialstärke und Energieaufnahmefähigkeit besitzt.

Ist die Prallplatte in der genannten Weise vollflächig nach Art einer Beschichtung auf der Innenseite der Abdeckhaube angebracht, ist die Abdeckhaube nichtsdestotrotz innenseitig lackiert, so dass die Prallplatte auf der innenumfangsseitigen Lackierung der Abdeckplatte aufgebracht ist. Durch eine solche auch innenumfangsseitig vorgesehene Lackierung im Abdeckblech, die sozusagen unter der Prallplatte liegt, kann Korrosion der Abdeckhaube auch von der Innenseite her verhindert werden.

Bei der genannten vollflächigen Anbringung kann die Prallplatte beispielsweise flächig oder partiell an der Innenseite der Abdeckhaube verklebt sein. Alternativ oder zusätzlich kann die Prallplatte aber auch in anderer Weise an der Abdeckhaube befestigt sein, beispielsweise durch Anschrauben oder Annieten oder durch andere formschlüssige Befestigungsmittel wie beispielsweise Klemmpratzen oder Raststecker.

In alternativer Weiterbildung der Erfindung muss die Prallplatte aber nicht vollflächig anliegend an der Innenseite der Abdeckhaube angebracht sein, sondern kann nach Art einer Innenschale vor die Innenseite der Abdeckhaube geblendet sein und zusammen mit der Abdeckhaube eine doppelwandige Haubenstruktur bilden. Beispielsweise kann die Abdeckplatte von der Abdeckhaube durch einen Luftspalt beabstandet sein, beispielsweise durch Distanzstücke zwischen der Innenseite der Abdeckhaube und der Außenseite der Prallplatte. Durch eine solche spaltförmig beabstandete Anordnung der Prallplatte können mechanische Beanspruchungen und die Aufschlagenergie von Steinschlag oder dergleichen besonders effizient von der Abdeckhaube weggehalten werden.

Gemäß der Erfindung bestehen die Prallplatte einerseits und die Abdeckhaube andererseits aus unterschiedlichen Werkstoffen, aus Kunststoff einerseits und einem Metallwerkstoff andererseits. Insbesondere kann die Abdeckhaube in an sich per se bekannter Weise aus einem Metallblech geformt und ggf. lackiert sein, während die Prallplatte aus Kunststoff gefertigt ist.

Um angeworfenes Erntegut leicht abgleiten zu lassen und ein Anbacken von ggf. auch leicht feuchtem, klebrigem Erntegut zu verhindern, besitzt die Prallplatte eine gleitreibungsarme, glatte und mit einer geringen Rauhtiefe versehene Oberfläche, wobei vorteilhafterweise ein thermoplastischer Kunststoff mit einem reibungsreduzierenden Zusatz verwendet wird.

Vorteilhafterweise kann die Prallplatte zumindest abschnittsweise aus einem gesinterten Kunststoff auf Polyethylenbasis gefertigt sein. Solche gesinterten Kunststoffe auf Polyethylenbasis besitzen eine hohe Schlagzähigkeit, gleichzeitig ausgezeichnete Gleiteigenschaften und wirken überdies lärmdämmend. Insbesondere kann ein hochmolekulares, insbesondere ultrahochmolekulares Niederdruckpolyethylen verwendet bzw. gesintert werden, um die Prallplatte zu bilden.

Um die Gleitreibung besonders niedrig zu halten, gleichzeitig aber gute Verschleißeigenschaften zu erzielen, kann der gesinterte Kunststoff auf Polyethylenbasis mit Molybdändisulfid legiert sein, wobei der Anteil dieses Zusatzstoffes im Bereich von 0,1 Gewichtsprozent bis 20 Gewichtsprozent, insbesondere etwa 1 Gewichtsprozent bis 10 Gewichtsprozent gewählt sein kann.

Vorteilhafterweise wird der Kunststoff der Prallplatte derart ausgewählt und/oder legiert und/oder gesintert, dass die Kerbschlagzähigkeit der Kunststoffplatte im Bereich von 90-200, insbesondere etwa 100-160 kJ/m² beträgt. Die genannte Kerbschlagzähigkeit kann beispielsweise nach dem DIN EN ISO 179-2 Messverfahren bestimmt sein. Alternativ oder zusätzlich kann der Kunststoff der Prallplatte derart konfiguriert, d.h. ausgewählt und/oder legiert und/oder gesintert sein, dass die Shorehärte der Prallplatte, beispielsweise gemessen nach DIN EN ISO 868, 15 S im Bereich von 50-70, insbesondere etwa 60-67 Shore beträgt.

Ein solchermaßen konfigurierter Kunststoff besitzt einerseits die ausreichende Festigkeit, insbesondere Kerbschlagzähigkeit. Andererseits wirkt er stark lärmdämmend, um die Geräuschbildung bei Steinschlag akustisch signifikant zu dämpfen.

Die Prallplatte überdeckt zwei Drittel oder mehr der Abdeckhaube.

Die Prallplatte kann vorteilhafterweise eine gebogene und/oder polygonzugartig abgeknickte Konturierung besitzen und/oder eine Freiformfläche bilden, die sich um den Arbeitsrotor insbesondere umfangsseitig herum erstreckt und beispielsweise zumindest abschnittsweise tangential zur Abwurfrichtung des Arbeitsrotors angeordnet sein kann.

Die Abdeckplatte kann zumindest im Wesentlichen der Konturierung der Abdeckhaube entsprechen bzw. dieser folgen, wobei die Prallplatte nicht die gesamte Abdeckhaube formenmäßig abbilden muss, sondern sich nur in einem steinschlaggefährdeten Bereich der Abdeckhaube erstrecken kann.

In vorteilhafter Weiterbildung der Erfindung kann die genannte Prallplatte an der Abdeckhaube eines Erntegut-Aufbereiters vorgesehen sein, wobei ein solcher Erntegutaufbereiter beispielsweise einen rotatorisch antreibbaren Zinkenrotor aufweisen kann, der beispielsweise um eine liegende Rotationsachse insbesondere quer zur Fahrtrichtung angetrieben sein kann. Die Abdeckhaube und/oder die Prallplatte können bei einem solchen Aufbereiterrotor eine einachsig gebogene Konturierung nach Art eines Strangpressprofils besitzen und/oder sich nach Art einer gebogenen Rinne umfangsseitig über dem Arbeitsrotor erstrecken.

Ein solcher Aufbereiter kann insbesondere zusammen mit einer Mähmaschine Verwendung finden und/oder als Mähwerks-Aufbereiter-Kombination ausgebildet sein.

Die genannte Abdeckhaube zusammen mit der innenseitig vorgesehenen Prallplatte kann aber auch an einem reinen Mähwerk Verwendung finden, insbesondere dessen heckseitigem Auswurfbereich abdecken, wenn eine Mähfunktion ohne zusätzliche Aufbereiterwirkung erwünscht ist.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer landwirtschaftlichen Erntemaschine in Form einer Mähmaschinen-Aufbereiter-Kombination nach einer vorteilhaften Ausführung der Erfindung, bei der ein Aufbereiterrotor dem Mähwerksaggregat nachgeordnet und durch eine Abdeckhaube abgedeckt ist, und
- Fig. 2:: eine perspektivische Draufsicht auf die Prallplatte, die der Abdeckhaube des Aufbereiters innenumfangsseitig vorgeblendet ist.

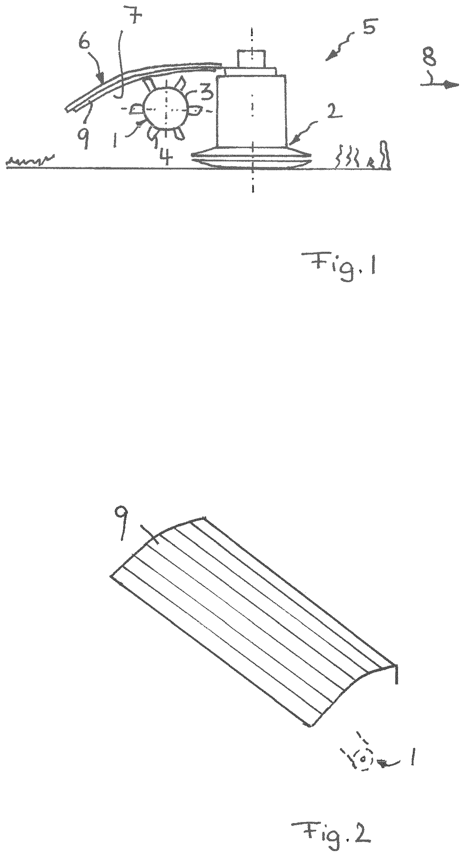

Wie Fig. 1 zeigt, kann die landwirtschaftliche Erntemaschine ein Mähwerk 2 umfassen, das beispielsweise eine Mehrzahl nebeneinander angeordneter Schneidrotoren umfassen kann, die um aufrechte Achsen antreibbar sein und an einem bodenseitigen Abschnitt umfangsseitig Schneidmesser aufweisen können. Grundsätzlich kann die Mähwerkseinheit 2 aber auch andere Schneidwerkzeuge beispielsweise in Form eines Messerbalkens aufweisen.

Der Mähwerkseinheit 2 in Fahrtrichtung nachgeordnet kann ein Aufbereiterrotor 1 sein, der um eine liegende Rotationsachse, die sich quer zur Fahrtrichtung erstrecken kann, angetrieben werden kann, wobei ein solcher Aufbereiterrotor beispielsweise einen im Wesentlichen zylindrischen Rotorkorpus 3 besitzen kann, von dessen Umfang Aufbereiterzinken 4 vorstehen können. Grundsätzlich können aber auch anders konfigurierte bzw. konturierte Aufbereiterrotoren Verwendung finden, so wie sie beispielsweise per se aus der Schrift EP 26 33 749 A1 bekannt sind, auf die insoweit, d.h. die Ausbildung des Aufbereiterrotors Bezug genommen wird.

Wie Fig. 1 zeigt, kann der Aufbereiterrotor 1 umfangsseitig von einer Abdeckhaube 6 umgeben bzw. abgedeckt sein, wobei sich die genannte Abdeckhaube 2 insbesondere oberhalb und/oder hinter dem Abdeckrotor erstrecken kann. Vorteilhafterweise erstreckt sich die genannte Abdeckhaube 2 zumindest in einem Abwurfbereich 7, in dem der Arbeitsrotor 1 bestimmungsgemäß Erntegut abwirft. Die Abdeckhaube 6 kann sich hierbei zumindest in einem Sektor erstrecken, der sich in Fahrtrichtung hinter und/oder über dem Arbeitsrotor 1 erstreckt. Soweit auf die Fahrtrichtung der Erntemaschine 5 Bezug genommen wird, sei darauf hingewiesen, dass die Erntemaschine 5 insbesondere ein Anbaugerät sein kann, das an einen Schlepper anbaubar ist, wobei grundsätzlich aber auch selbstfahrende Erntemaschinen in Betracht kommen, beispielsweise in Form von selbstfahrenden Mähern. Die genannte Fahrtrichtung ist in Fig. 1 mit der Bezugsziffer 8 gekennzeichnet.

Die Abdeckhaube 6 kann insbesondere bogenförmig und/oder abgekantet nach Art eines Polygonzugprofils um den Arbeitsrotor 1 herum konturiert sein und/oder sich entlang der Umfangsseite des Arbeitsrotors anschmiegen, insbesondere im Abwurfbereich 7 ein sich tangential zur Abwurfrichtung erstreckendes Leitblech bilden.

Beispielsweise kann die Abdeckhaube 7 nach Art einer Rinne oder eines einachsig gebogenen Strangpressprofils ausgebildet sein.

Die genannte Abdeckhaube 6 kann hierbei beispielsweise aus einem Metallblech gefertigt sein.

Auf der Innenseite der Abdeckhaube 6, die dem Arbeitsrotor 1 zugewandt ist, ist eine Prallplatte 9 vorgesehen, die die eigentliche Abdeckhaube 6 vor Steinschlägen schützt und eine innenseitige Verblendung der Abdeckhaube bilden kann.

Wie eingangs schon erläutert, kann die genannte Prallplatte vollflächig aufliegend nach Art einer Beschichtung an der Innenwandung der Abdeckhaube 6 angebracht sein. Alternativ kann die Prallplatte 9 auch nach Art einer Innenschale vor die Innenseite der Abdeckhaube geblendet sein, um zusammen mit der Abdeckhaube eine doppelwandige Haubenstruktur zu bilden. Beispielsweise kann ein Luftspalt zwischen Prallplatte 9 und Abdeckhaube 6 vorgesehen sein. Es sind auch Mischformen möglich, beispielsweise dahingehend, dass die Prallplatte einen vollflächig an der Abdeckhaube anliegenden Abschnitt und einen weiteren, von der Prallplatte durch einen Luftspalt beabstandeten Abschnitt umfasst.

Die Prallplatte 9 kann die Abdeckhaube 6 formenmäßig nachbilden und/oder in ihrer Form im Wesentlichen der Abdeckhaube oder einem wesentlichen Abschnitt hiervon entsprechen. Insofern gelten die vorgenannten Ausführungen zur Konturierung bzw. Formgebung der Abdeckhaube analog auch für die Prallplatte.

Die genannte Prallplatte 9 kann an der Abdeckhaube 6 in verschiedener Weise befestigt sein, wobei insbesondere eine formschlüssige und/oder kraftschlüssige Befestigung, beispielsweise durch eine Verschraubung mit mehreren Schraubbolzen vorgesehen sein kann.

Vorteilhafterweise kann eine lösbare Befestigung der Prallplatte 9 an der Abdeckhaube 6 vorgesehen sein, um die Prallplatte 9 bei Verschleiß austauschen zu können.

Die genannte Prallplatte 9 ist aus einem Kunststoff gefertigt, insbesondere aus einem gesinterten Kunststoff auf Polyethylenbasis. Ein solcher Werkstoff ist beispielsweise unter dem Markennamen Robalon bekannt.

## Patentansprüche

1. Landwirtschaftliche Erntemaschine mit einem rotatorisch antreibbaren Arbeitsrotor (1) zum Bearbeiten von halm- und/oder blattförmigem Erntegut, wobei dem Arbeitsrotor (1) umfangsseitig eine Abdeckhaube (6) aus einem Metallwerkstoff zugeordnet ist, die einen Abwurfbereich (7) des Arbeitsrotors (1) begrenzt und einen Förderkanal zwischen dem Arbeitsrotor (1) und der Abdeckhaube (6) begrenzt, wobei an einer dem Arbeitsrotor (1) zugewandten Innenseite der Abdeckhaube (6) eine Prallplatte (9) zum Schutz der Abdeckhaube (6) gegen Steinschlag vom Arbeitsrotor (1) her vorgesehen ist, wobei die Prallplatte (9) zwei Drittel oder mehr der dem Arbeitsrotor (1) zugewandten Innenfläche der Abdeckhaube (6) abdeckt, **dadurch gekennzeichnet, dass** die Prallplatte (9) eine glatte, gleitreibungsarme Oberfläche besitzt und aus einem thermoplastischen Kunststoff besteht, wobei die Prallplatte (9) lösbar an der Abdeckhaube (6) befestigt ist, wobei die der Prallplatte (9) zugewandte Innenseite der Abdeckhaube (6) lackiert ist.

2. Landwirtschaftliche Erntemaschine nach dem vorhergehenden Anspruch, wobei die Prallplatte (9) vollflächig anliegend nach Art einer Beschichtung an der Innenwandung der Abdeckhaube (6) angebracht ist.

3. Landwirtschaftliche Erntemaschine nach Anspruch 1, wobei die Prallplatte (9) nach Art einer Innenschale vor die Innenseite der Abdeckhaube (6) geblendet ist und zusammen mit der Abdeckhaube (6) eine doppelwandige Haubenstruktur bildet.

4. Landwirtschaftliche Erntemaschine nach dem vorhergehenden Anspruch, wobei die Prallplatte (9) von der Innenseite der Abdeckhaube (6) durch einen vorzugsweise gleichmäßigen Spalt beabstandet ist.

5. Landwirtschaftliche Erntemaschine nach einem der vorhergehenden Ansprüche, wobei die Prallplatte (9) und die Abdeckhaube (6) aus unterschiedlichen Werkstoffen, vorzugsweise aus Kunststoff einerseits und einem Metallwerkstoff andererseits, gefertigt sind.

6. Landwirtschaftliche Erntemaschine nach einem der vorhergehenden Ansprüche, wobei die Prallplatte (9) aus einem gesinterten Kunststoff auf Polyethylenbasis gefertigt ist.

7. Landwirtschaftliche Erntemaschine nach dem vorhergehenden Anspruch, wobei der Kunststoff mit Molybdändisulfid legiert ist.

8. Landwirtschaftliche Erntemaschine nach einem der vorhergehenden Ansprüche, wobei die Prallplatte (9) aus einem Kunststoff besteht, der derart ausgewählt und ausgebildet ist, dass die Prallplatte (9) eine Kerbschlagzähigkeit im Bereich von 100-180 kJ/m² und eine Shorehärte im Bereich von 60-70 Shore besitzt.

9. Landwirtschaftliche Erntemaschine nach einem der vorhergehenden Ansprüche, wobei die Prallplatte (9) eine gebogene und/oder polygonzugartig abgeknickte Konturierung besitzt, die sich um den Arbeitsrotor (1) umfangsseitig herum erstreckt und zumindest abschnittsweise tangential zu einer Abwurfrichtung des Arbeitsrotors (1) in dessen Abwurfbereich (7) ausgerichtet ist.

10. Landwirtschaftliche Erntemaschine nach einem der vorhergehenden Ansprüche, wobei die Erntemaschine eine Aufbereitereinheit umfasst und der Arbeitsrotor (1) als Aufbereiterrotor zum Aufbereiten und/oder Konditionieren von geschnittenem Erntegut ausgebildet ist und die Abdeckhaube (6) eine Aufbereiterabdeckhaube bildet.

## Claims

1. Agricultural harvester, comprising a rotatably drivable working rotor (1) for processing stalk-like and/or leaf-like crops, wherein the working rotor (1) is assigned a covering hood (6), made of a metal material, on the periphery thereof, which hood defines a discharge region (7) of the working rotor (1) and defines a conveying channel between the working rotor (1) and the covering hood (6), wherein a baffle plate (9) for protecting the covering hood (6) against stone chips from the working rotor (1) is provided on an inner face of the covering hood (6) that faces the working rotor (1), wherein the baffle plate (9) covers two-thirds or more of the inner face of the covering hood (6) that faces the working rotor (1), **characterised in that** the baffle plate (9) has a smooth surface having low sliding friction, and consists of a thermoplastic polymer, wherein the baffle plate (9) is releasably fastened to the cover hood (6), wherein the inner face of the covering hood (6) that faces the baffle plate (9) is painted.

2. Agricultural harvester according to the preceding claim, wherein the baffle plate (9) is attached to the inner wall of the covering hood (6) so as to rest thereon over the entire surface, in the manner of a coating.

3. Agricultural harvester according to claim 1, wherein the baffle plate (9) is hidden in the manner of an inner shell in front of the inner face of the covering hood (6) and, together with the covering hood (6), forms a double-walled hood structure.

4. Agricultural harvester according to the preceding claim, wherein the baffle plate (9) is spaced apart from the inner face of the covering hood (6) by means of a preferably uniform gap.

5. Agricultural harvester according to any of the preceding claims, wherein the baffle plate (9) and the covering hood (6) are produced from different materials, preferably plastics material on the one hand, and a metal material on the other hand.

6. Agricultural harvester according to any of the preceding claims, wherein the baffle plate (9) is produced from a sintered plastics material based on polyethylene.

7. Agricultural harvester according to the preceding claim, wherein the plastics material is alloyed with molybdenum disulphide.

8. Agricultural harvester according to any of the preceding claims, wherein the baffle plate (9) consists of a plastics material which is selected and designed such that the baffle plate (9) has a notch impact resistance in the range of 100-180 kJ/m² and a Shore hardness in the range of 60-70 Shore.

9. Agricultural harvester according to any of the preceding claims, wherein the baffle plate (9) has a curved contour and/or a contour that is bent polygonal chain-like manner, which extends around the working rotor (1) on the periphery and is oriented so as to be tangential to a discharge direction of the working rotor (1) in the discharge region (7) thereof, at least in portions.

10. Agricultural harvester according to any of the preceding claims, wherein the harvester comprises a processing unit, and the working rotor (1) is designed as a processing rotor for processing and/or conditioning the cut crops, and the covering hood (6) forms a processing covering hood.

## Revendications

1. Machine de récolte agricole avec un rotor de travail (1) pouvant être entraîné en rotation pour usiner des produits de récolte en forme de paille et/ou en forme de feuilles, dans laquelle est associé, côté périphérie, au rotor de travail (1) un capot de recouvrement (6) composé d'un matériau en métal, qui délimite une zone d'éjection (7) du rotor de travail (1) et délimite un canal de transport entre le rotor de travail (1) et le capot de recouvrement (6), dans laquelle est prévue, sur un côté intérieur, tourné vers le rotor de travail (1), du capot de recouvrement (6), une plaque de percussion (9) pour protéger le capot de recouvrement (6) contre des coups de pierre provenant du rotor de travail (1), dans laquelle la plaque de percussion (9) recouvre deux tiers ou plus de la surface intérieure, tournée vers le rotor de travail (1), du capot de recouvrement (6), **caractérisée en ce que** la plaque de percussion (9) possède une surface lisse à faible friction de glissement et est constituée d'une matière synthétique thermoplastique, dans laquelle la plaque de percussion (9) est fixée de manière amovible sur le capot de recouvrement (6), dans laquelle le côté intérieur, tourné vers la plaque de percussion (9), du capot de recouvrement (6) est laqué.

2. Machine de récolte agricole selon la revendication précédente, dans laquelle la plaque de percussion (9) est installée sur la paroi intérieure du capot de recouvrement (6) de manière à reposer sur toute la surface à la manière d'un revêtement.

3. Machine de récolte agricole selon la revendication 1, dans laquelle la plaque de percussion (9) est dotée d'un écran à la manière d'une coque intérieure devant le côté intérieur du capot de recouvrement (6) et forme conjointement avec le capot de recouvrement (6) une structure de capot à double paroi.

4. Machine de récolte agricole selon la revendication précédente, dans laquelle la plaque de percussion (9) est tenue à distance du côté intérieur du capot de recouvrement (6) par une fente de préférence homogène.

5. Machine de récolte agricole selon l'une quelconque des revendications précédentes, dans laquelle la plaque de percussion (9) et le capot de recouvrement (6) sont produits à partir de matériaux différents, de préférence à partir de matière plastique d'une part et d'un matériau en métal d'autre part.

6. Machine de récolte agricole selon l'une quelconque des revendications précédentes, dans laquelle la plaque de percussion (9) est produite à partir d'une matière synthétique frittée à base de polyéthylène.

7. Machine de récolte agricole selon la revendication précédente, dans laquelle la matière synthétique est alliée avec du disulfure de molybdène.

8. Machine de récolte agricole selon l'une quelconque des revendications précédentes, dans laquelle la plaque de percussion (9) est constituée d'une matière synthétique qui est choisie et réalisée de telle manière que la plaque de percussion (9) possède un indice de résilience dans la plage de 100 -180 kJ/m² et une dureté Shore dans la plage de 60 - 70 Shore.

9. Machine de récolte agricole selon l'une quelconque des revendications précédentes, dans laquelle la plaque de percussion (9) possède un contour cintré et/ou coudé à la manière d'un polygone, qui s'étend tout autour du rotor de travail (1) côté périphérie et est orienté au moins par endroits de manière tangentielle par rapport à une direction d'éjection du rotor de travail (1) dans sa zone d'éjection (7).

10. Machine de récolte agricole selon l'une quelconque des revendications précédentes, dans laquelle la machine de récolte comprend une unité de préparation et le rotor de travail (1) est réalisé en tant que rotor de préparation pour préparer et/ou conditionner des produits de récolte découpés et le capot de recouvrement (6) forme un capot de recouvrement de système de préparation.
